# EUROPÄISCHE PATENTANMELDUNG

(11) **EP 2 036 652 A1**
(43) Veröffentlichungstag der Anmeldung: **18.03.2009**
(21) Anmeldenummer: 08015972.6
(22) Anmeldetag: 10.09.2008
(51) Int. Cl.: B23K 26/04, B23K 26/20, B23K 26/00

(54) **Laserschweißvorrichtung mit einer manuell verstellbaren Haltevorrichtung für den optischen Bearbeitungskopf**

(30) Priorität: 11.09.2007 DE 202007012687 U
(71) Anmelder: Ofer, Vladislav, Dr., 64283 Darmstadt (DE)
(72) Erfinder: Ofer, Vladislav, Dr., 64283 Darmstadt (DE)
(74) Vertreter: Katscher Habermann Patentanwälte

(57) **Zusammenfassung**

Eine Laserschweißvorrichtung (1) mit einer Vorrichtung zur Erzeugung eines Laserstrahls und mit einem optischen Bearbeitungskopf (2), der eine Laserstrahlaustrittsöffnung und eine optische Kontrolleinrichtung (5) aufweist, weist eine manuell verstellbare Haltevorrichtung (6) mit einer Befestigungsvorrichtung (10) auf, wobei der optische Bearbeitungskopf (2) an einem der Befestigungsvorrichtung (10) entgegengesetzten Ende (12) der Haltevorrichtung (6) befestigbar und verfahrbar relativ zu der Befestigungsvorrichtung (10) ist. Die Haltevorrichtung (6) ist durch manuell betätigbare Feststelleinrichtungen in der gewünschten Anordnung und Ausrichtung festlegbar. Die Haltevorrichtung (6) weist mindestens ein manuell festlegbares Kugelgelenk (8) auf. Der optische Bearbeitungskopf (2) ist in einer Ebene automatisierbar verfahrbar an der Haltevorrichtung (6) befestigbar. Ein manuelles Verfahren des optischen Bearbeitungskopfes ist durch Ansteuerung mittels eines Joysticks oder anderer Bedienelemente bewirkbar. Die Befestigungsvorrichtung (10) weist kraftschlüssige Befestigungsmittel auf.

## Beschreibung

Die Erfindung betrifft eine Laserschweißvorrichtung mit einer Vorrichtung zur Erzeugung eines Laserstrahls und mit einem optischen Bearbeitungskopf, der eine Laserstrahlaustrittsöffnung und eine optische Kontrolleinrichtung aufweist.

Hochenergetische Laserstrahlen werden in den verschiedensten Anwendungen, beispielsweise zum Zerschneiden, zum Bearbeiten oder zum Verschweißen von Werkstücken verwendet. Bei den bekannten Laserschweißverfahren werden zwei Bauteile miteinander verschweißt, indem durch einen ausreichend hochenergetischen Laserstrahl die beiden Bauteile im Bereich von aneinandergrenzenden Oberflächen lokal erhitzt, gegebenenfalls angeschmolzen und bei dem anschließenden Erstarrungsvorgang miteinander verbunden werden. Es ist auch bekannt, zusätzlich ein Schweißmittel in Form von einem Zusatzdraht oder Pulver zu verwenden, um den Schweißvorgang zu erleichtern oder zu verbessern.

Es sind Laserschweißvorrichtungen aus der Praxis bekannt, die eine vollautomatisierte Abarbeitung von Laserschweißvorgängen ermöglichen. Derartige Laserschweißautomaten werden beispielsweise umfangreich in der Automobilindustrie verwendet.

Es sind auch mobile Laserschweißvorrichtungen der eingangs genannten Gattung bekannt, bei denen eine Vorrichtung zur Erzeugung eines Laserstrahls an einem verfahrbaren Gestell angeordnet ist. Die Vorrichtung zur Erzeugung eines Laserstrahls ist üblicherweise über einen flexiblen Lichtleiter mit einem optischen Bearbeitungskopf verbunden. Der optische Bearbeitungskopf weist eine optische Kontrolleinrichtung, wie beispielsweise ein Mikroskop oder eine Kamera, und optische Strahlführungskomponenten für den Laserstrahl, wie beispielsweise eine Fokusiereinrichtung für den Laserstrahl, auf. Mit dem Mikroskop kann die Positionierung des über den Roboterarm an dem beweglichen Gestell befestigten optischen Bearbeitungskopfes relativ zu einem zu bearbeitenden Werkstück ermittelt und vorgegeben werden. Anschließend kann ein Bewegungsablauf für den aus dem optischen Bearbeitungskopf austretenden Laserstrahl vorgegeben und automatisiert abgearbeitet werden.

Es ist ebenso denkbar, dass der optische Bearbeitungskopf eine integrierte Vorrichtung zur Erzeugung eines Laserstrahls aufweist, so dass keine gesonderte Zuführung eines Laserstrahls beispielsweise durch flexible Lichtleiter oder dergleichen erforderlich ist.

Durch ein geeignetes automatisiertes Bewegen des Roboterarms kann der optische Bearbeitungskopf verfahren und neu positioniert werden, so dass ein noch nicht abgeschlossener Schweißvorgang weitergeführt werden kann. Die neue Positionierung des optischen Bearbeitungskopfes erfolgt durch einen automatisierten Bewegungsablauf des Roboterarms, um längere Schweißvorgänge automatisiert durchführen zu können.

Die aus der Praxis bekannten mobilen Laserschweißvorrichtungen sind kostenintensiv und auf Grund der konstruktiven Anforderungen an den Roboterarm störungsanfällig.

Aufgabe der vorliegenden Erfindung ist es demzufolge, eine kostengünstige Laserschweißvorrichtung zu ermöglichen, die eine möglichst einfache, störungsfreie und zuverlässige Handhabung ermöglicht.

Diese Aufgabe wird erfindungsgemäß dadurch gelöst, dass eine Laserschweißvorrichtung der eingangs genannten Gattung eine manuell verstellbare Haltevorrichtung mit einer Befestigungsvorrichtung aufweist, wobei der optische Bearbeitungskopf an einem der Befestigungsvorrichtung entgegengesetzten Ende der Haltevorrichtung befestigbar und verfahrbar relativ zu der Befestigungsvorrichtung ist. Im Gegensatz zu einem automatisch steuerbaren Roboterarm ist eine manuell verstellbare Haltevorrichtung wesentlich kostengünstiger. Die manuell verstellbare Haltevorrichtung kann mittels der Befestigungsvorrichtung entweder unmittelbar an den zu bearbeitenden Werkstücken oder in deren Umgebung angeordnet und festgelegt werden. Durch eine in vielen Fällen einfach und schnell durchzuführende manuelle Betätigung der verstellbaren Haltevorrichtung kann der optische Bearbeitungskopf so angeordnet und justiert werden, dass der beabsichtigte Laserschweißvorgang begonnen werden kann.

Der optische Bearbeitungskopf kann verfahrbar an der Haltevorrichtung befestigbar sein, so dass entlang eines manuell oder automatisch vorgebbaren Verfahrweges der beabsichtigte Laserschweißvorgang durchgeführt werden kann. Sollte der maximale Verfahrweg des optischen Bearbeitungskopfes relativ zu der Haltevorrichtung nicht ausreichen, um den beabsichtigten Laserschweißvorgang vollständig durchführen und abschließen zu können, so kann der Laserschweißvorgang unterbrochen und nach einer veränderten Anordnung und Ausrichtung der Haltevorrichtung bzw. einer neu angepassten Positionierung des optischen Bearbeitungskopfes fortgesetzt werden. Es ist ebenso denkbar, dass der optische Bearbeitungskopf starr an der Haltevorrichtung befestigbar ist und die Haltevorrichtung zusammen mit dem starr verbundenen optischen Bearbeitungskopf verfahrbar an der Befestigungsvorrichtung befestigt ist.

Vorzugsweise ist vorgesehen, dass die Haltevorrichtung mindestens ein manuell festlegbares Kugelgelenk aufweist. Die Haltevorrichtung sollte zweckmäßigerweise innerhalb eines vorgegebenen maximalen Aktionsradius eine beliebige Verstellung bzw. Ausrichtung in zwei, vorzugsweise in drei Raumrichtungen ermöglichen. Geeignete Haltevorrichtungen sollten zu diesem Zweck mindestens ein Drehgelenk sowie einen um eine Schwenkachse schwenkbaren Haltearmabschnitt aufweisen. Eine besonders komfortable Verstellmöglichkeit der Haltevorrichtung wird durch die Verwendung eines Kugelgelenks in Kombination mit einem Drehgelenk oder durch die Verwendung von zwei Kugelgelenken ermöglicht. Es sind auch andere Ausführungsformen für die Haltevorrichtung möglich, sofern eine ausreichende manuelle Verstellmöglichkeit und eine zuverlässige Festlegung einer gewünschten Positionierung gewährleistet werden.

Die einzelnen Gelenke werden entweder kraftschlüssig in einer manuell vorgegebenen Anordnung und Ausrichtung fixiert, oder sie können durch manuell betätigbare Feststelleinrichtungen in der gewünschten Anordnung und Ausrichtung festgelegt werden.

Einer besonders vorteilhaften Ausgestaltung des Erfindungsgedankens zufolge ist vorgesehen, dass der optische Bearbeitungskopf in einer Ebene automatisierbar verfahrbar an der Haltevorrichtung befestigbar ist. Dies kann beispielsweise mittels einer Positioniereinrichtung erreicht werden, die ein automatisches Verfahren des optischen Bearbeitungskopfes innerhalb einer durch die Positioniereinrichtung vorgegebenen Ebene ermöglicht. Geeignete Positioniereinrichtungen entsprechen den beispielsweise den im Zusammenhang mit automatisierbaren Mikroskopen bereits bekannten X-Y-Tischen und weisen eine maximale Auslenkungsfläche von beispielsweise 10 x 10 mm bzw. 20 x 20 mm auf. In Abhängigkeit von der zulässigen Traglast der Haltevorrichtung können auch wesentlich größere maximale Auslenkungsflächen von beispielsweise 300 x 300 mm oder mehr realisiert werden.

Es ist ebenfalls denkbar, dass derartige Positioniereinrichtungen entweder zusätzlich oder ausschließlich eine manuelle Auslenkung bzw. ein manuelles Verfahren des optischen Bearbeitungskopfes innerhalb der durch die Positioniereinrichtung vorgegebenen Ebene ermöglichen. Ein manuelles Verfahren des optischen Bearbeitungskopfes kann beispielsweise durch Ansteuerung mittels eines Joysticks oder anderer Bedienelemente ermöglicht, bzw. erleichtert werden.

Um ein einfaches Anbringen und Festlegen der Befestigungsvorrichtung an einem Werkstück oder benachbart zu einem Werkstück zu ermöglichen, ist vorgesehen, dass die Befestigungsvorrichtung kraftschlüssige Befestigungsmittel aufweist. Vorzugsweise weist die Befestigungsvorrichtung ein oder mehrere Magnetelemente auf, die eine zuverlässige Festlegung der Befestigungsvorrichtung an geeigneten Oberflächen magnetisierbarer oder magnetischer Werkstücke bzw. Befestigungsflächen in der Umgebung der Werkstücke ermöglichen. Die Befestigungsvorrichtung kann auch lösbar oder dauerhaft klebend mit einer geeigneten Befestigungsfläche verbunden werden. In vielen Fällen wird eine Klemmbefestigung oder eine formschlüssige Befestigung der Befestigungsvorrichtung entweder unmittelbar an dem zu bearbeitenden Werkstück oder in dessen Umgebung vorteilhaft sein. Auch ein Befestigen mittels Schraubverbindungen oder durch Klebeband ist denkbar.

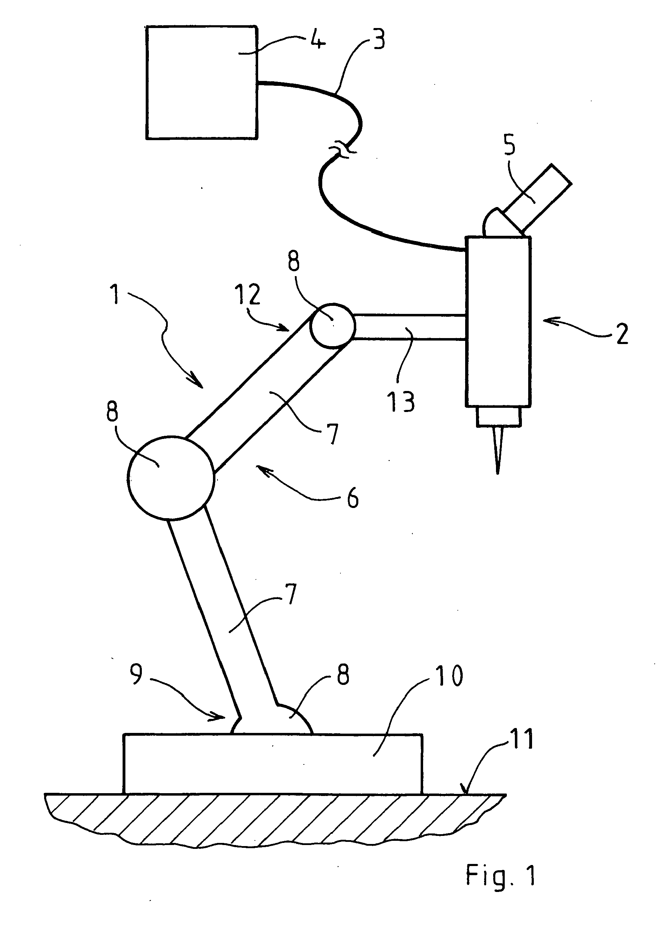

Nachfolgend wird ein Ausführungsbeispiel näher erläutert, welches in der Zeichnung dargestellt ist.

Bei dem in der Figur schematisch dargestellten Ausführungsbeispiel weist eine erfindungsgemäße Laserschweißvorrichtung 1 einen optischen Bearbeitungskopf 2 auf, der über einen flexiblen Lichtleiter 3 mit einer Vorrichtung zur Erzeugung eines Laserstrahls 4 verbunden ist. Die Vorrichtung zur Erzeugung eines Laserstrahls 4 kann dabei entweder mobil an einem verfahrbaren Gestell oder aber ortsfest angeordnet sein. Der flexible Lichtleiter 3 weist eine ausreichende Länge auf, um eine für die Anwendung ausreichende Bewegungsfreiheit des optischen Bearbeitungskopfes 2 zu ermöglichen.

Der optische Bearbeitungskopf 2 weist üblicherweise eine optische Kontrollvorrichtung 5 auf, die in den meisten Fällen ein Mikroskop sein kann. Es ist auch denkbar, dass die optische Kontrollvorrichtung 5 beispielsweise eine Kamera oder eine andere bildgebende Einrichtung aufweist, deren Signale auf einem externen Bildschirm angezeigt werden. Der optische Bearbeitungskopf 2 weist nicht dargestellte Strahlführungskomponenten für einen Laserstrahl auf, der über den flexiblen Lichtleiter 3 eingekoppelt wird und an einer ebenfalls nicht dargestellten Austrittsöffnung des optischen Bearbeitungskopfes 2 in einer vorgegebenen Ausrichtung wieder austritt. Durch eine geeignete Anordnung und Ausrichtung des optischen Bearbeitungskopfes 2 kann der austretende Laserstrahl in einer vorgegebenen Weise ausgerichtet und für die Bearbeitung bzw. für einen Schweißvorgang an einem nicht dargestellten Werkstück verwendet werden.

Die Laserschweißvorrichtung 1 weist eine manuell verstellbare Haltevorrichtung 6 auf, die mehrere Haltearmabschnitte 7 aufweist, die über Gelenke 8 miteinander verbunden sind. Die einzelnen Gelenke 8 können dabei Kugelgelenke, Drehgelenke oder Schwenkgelenke sein.

An einem ersten Ende 9 der Haltevorrichtung 6 ist eine Befestigungsvorrichtung 10 in Form einer magnetischen Befestigungsplatte angeordnet, die zudem mittels geeigneter, jedoch nicht dargestellter Befestigungsmittel an einer geeigneten Oberfläche 11 befestigt werden kann. An einem zweiten, der Befestigungsvorrichtung 10 entgegengesetzten Ende 12 weist die Haltevorrichtung 6 eine automatische Positioniervorrichtung 13 auf, die ein automatisiertes Verfahren des optischen Bearbeitungskopfes 2 innerhalb einer durch die Befestigungsvorrichtung 13 vorgegebenen Ebene mit einem maximalen Verfahrweg von beispielsweise 20 x 20 mm oder 50 x 50 mm ermöglicht. Durch die Verwendung einer geeigneten Positioniervorrichtung 13, die in vielen Fällen handelsüblich erhältlich ist und lediglich geringe Modifikationen bzw. Anpassungen erfordert, können abweichend hierzu auch wesentlich kleinere Verfahrwege oder wesentlich größere Verfahrwege für den optischen Bearbeitungskopf 2 ermöglicht werden. In Kombination mit einer geeigneten Steuerungsvorrichtung kann ein vollständig automatisiertes Verfahren des optischen Bearbeitungskopfes 2 vorgegeben werden.

Ein derart automatisierter Laserschweißvorgang kann gestartet werden, sobald die manuell verstellbare Haltevorrichtung 6 so angeordnet und ausgerichtet ist, dass sich der optische Bearbeitungskopf 2 in einer geeigneten Position und Ausrichtung befindet, um den gewünschten Laserschweißvorgang beginnen zu können. Die einzelnen Haltearmabschnitte 7 der manuell verstellbaren Haltevorrichtung 6 können in dieser Position durch geeignete Befestigungsmittel bzw. Fixiermittel festgelegt werden, um eine nachträgliche Auslenkung der Haltevorrichtung 6, beispielsweise während eines Laserschweißvorgangs, zu verhindern.

## Patentansprüche

1. Laserschweißvorrichtung (1) mit einer Vorrichtung zur Erzeugung eines Laserstrahls und mit einem optischen Bearbeitungskopf (2) , der eine Laserstrahlaustrittsöffnung und eine optische Kontrolleinrichtung (5) aufweist, **dadurch gekennzeichnet, dass** die Laserschweißvorrichtung (1) eine manuell verstellbare Haltevorrichtung (6) mit einer Befestigungsvorrichtung (10) aufweist, wobei der optische Bearbeitungskopf (2) an einem der Befestigungsvorrichtung (10) entgegengesetzten Ende (12) der Haltevorrichtung (6) befestigbar und verfahrbar relativ zu der Befestigungsvorrichtung (10) ist.

2. Laserschweißvorrichtung nach Anspruch 1, **dadurch gekennzeichnet, dass** die Haltevorrichtung (6) durch manuell betätigbare Feststelleinrichtungen in der gewünschten Anordnung und Ausrichtung festlegbar ist.

3. Laserschweißvorrichtung nach Anspruch 2, **dadurch gekennzeichnet, dass** die Haltevorrichtung (6) mindestens ein manuell festlegbares Kugelgelenk (8) aufweist.

4. Laserschweißvorrichtung nach einem der vorangehenden Ansprüche, **dadurch gekennzeichnet, dass** der optische Bearbeitungskopf (2) in einer Ebene automatisierbar verfahrbar an der Haltevorrichtung (6) befestigbar ist.

5. Laserschweißvorrichtung nach einem der vorangehenden Ansprüche, **dadurch gekennzeichnet, dass** ein manuelles Verfahren des optischen Bearbeitungskopfes durch Ansteuerung mittels eines Joysticks oder anderer Bedienelemente bewirkbar ist.

6. Laserschweißvorrichtung nach einem der vorangehenden Ansprüche, **dadurch gekennzeichnet, dass** die Befestigungsvorrichtung (10) kraftschlüssige Befestigungsmittel aufweist.
